(19) **Europäisches Patentamt / European Patent Office / Office européen des brevets**

(11) **EP 4 305 602 B1**

(12) # EUROPEAN PATENT SPECIFICATION

(45) Date of publication and mention
of the grant of the patent:
**24.12.2025  Bulletin 2025/52**

(21) Application number: **22713883.1**

(22) Date of filing: **09.03.2022**

(51) International Patent Classification (IPC):
**G06V 10/74** *(2022.01)*    **G06V 10/24** *(2022.01)*
**G06V 10/32** *(2022.01)*    **G06V 10/36** *(2022.01)*
**G06V 10/56** *(2022.01)*    **G06V 10/86** *(2022.01)*
**G06V 20/30** *(2022.01)*    **G06Q 10/10** *(2023.01)*
**G06Q 40/08** *(2012.01)*

(52) Cooperative Patent Classification (CPC):
**G06V 10/761; G06Q 10/10; G06Q 40/08;
G06V 10/242; G06V 10/32; G06V 10/36;
G06V 10/56; G06V 10/86; G06V 20/30;**
G06V 2201/11

(86) International application number:
**PCT/EP2022/055984**

(87) International publication number:
**WO 2022/189482 (15.09.2022 Gazette 2022/37)**

(54) **QUANTITATIVE IMAGE ANALYSIS**

QUANTITATIVE BILDANALYSE

ANALYSE QUANTITATIVE D'IMAGES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.03.2021  US 202163200489 P**

(43) Date of publication of application:
**17.01.2024  Bulletin 2024/03**

(73) Proprietor: **Detectsystem Lab A/S**
**7120 Vejle Øst (DK)**

(72) Inventors:
• **LOVMAND, Jan**
  **8722 Hedensted (DK)**
• **TORP, Lars**
  **3480 Fredensborg (DK)**
• **HOLM, Rasmus Bækgård**
  **7100 Vejle (DK)**

(74) Representative: **Chas. Hude A/S**
**Langebrogade 3B**
**1411 Copenhagen K (DK)**

(56) References cited:
**GB-A- 2 588 251        GB-A- 2 608 583
US-A1- 2010 208 988    US-B1- 8 175 387**

• **KRISHNAVENI B ET AL: "Approximation
  algorithm based on greedy approach for face
  recognition with partial occlusion", MULTIMEDIA
  TOOLS AND APPLICATIONS, KLUWER
  ACADEMIC PUBLISHERS, BOSTON, US, vol. 78,
  no. 19, 22 June 2019 (2019-06-22), pages 27511 -
  27531, XP036882804, ISSN: 1380-7501, [retrieved
  on 20190622], DOI: 10.1007/S11042-019-07831-7**
• **ANONYMOUS: "Web colors", WIKIPEDIA, 3
  March 2021 (2021-03-03), pages 1 - 7,
  XP055960173, Retrieved from the Internet
  <URL:https://en.wikipedia.org/w/index.php?
  title=Web_colors&oldid=1009972912> [retrieved
  on 20220913]**

## Description

### FIELD OF THE INVENTION

The invention relates to the field of image analysis and a method for quantitatively rating the degree of similarity between images. The invention also relates to a device instructed to perform the method, and a program and a computer-readable medium with instructions for carrying out the method.

### BACKGROUND OF THE INVENTION

Digital documents such as files and images are widespread throughout society and industries. These digital documents may be classified in many ways regarding confidentiality and possible content of personal information making exchange and storage of such documents a cumbersome task. Furthermore, digital documents are relatively easy to manipulate to make different modified versions of the same digital document, e.g., an image may be resized, skewed or elements may be added or removed.

For some purposes where such digital documents and images are to be used, it may be sufficient and more expedient to convert the digital documents and images into a reduced data format. While this reduced data format will still serve many purposes going forward, even in the absence of the digital document or image itself, it can more easily comply with the requirements for data compliance in relation to confidentiality, General Data Protection Regulation (GDPR), Health Insurance Portability and Accountability Act (HIPAA) and the like.

Fraud is a global problem that affects not least the insurance industry. It is estimated that 10% of all insurance pay-outs are made to fraudsters. To receive an insurance pay-out, various documents must be presented to validate the insurance claim. Even then, there are loopholes. Fraudsters seek to cheat insurers in a plethora of ways and today, fraud has moved into the digital arena too.

Digital documents introduce a variety of new ways to cheat and commit fraud, not least insurance fraud. Verifying the uniqueness, ownership and authenticity of documents and items is very difficult when documents are digital files. In the past, digital rights management has been used on some file types to ensure that they were not copied, although the inconvenience thereof made it infeasible, and so insecure documents are here to stay. Verifying the uniqueness, ownership and authenticity of documents and items is the job of insurance investigators, who make value-judgments about documents throughout their workday. The more scrutinous they are, the slower and more expensive insurance pay-outs and premiums get. Some insurance companies have decided to solve this by being slack with verification and accepting as high as 20% fraud, since this allows them to have fewer investigators and so retain operative costs low.

Digital documents can often be copied indiscriminately. Keeping track of documents can be difficult and re-use of the same claim document for multiple cases across different insurance companies do happen. When a claim document is re-used in multiple insurance claim across different insurance companies, it is often due to insurance fraud. Fraudster either use their own or others images in multiple claims e.g. images downloaded from the internet.

To combat re-use of images in insurance fraud, some systems utilize a method where an image is converted to a HASH value and saved in a database. However, when a fraudster either mirrors, edits, rotates, resizes, crops or skews images, these traditional methods are no longer sufficient.

US 8 175 387 B1 discloses that two images are compared to determine how similar they are. First, a process normalizes each image, then horizontal and vertical byte sequences are derived from each image. A similarity formula is used to obtain a similarity value that represents the similarity between the two images. An approximate pattern matching algorithm is used to determine the error distance between the horizontal byte sequences for the images and to determine the error distance between the vertical byte sequences for the images. The error distances and the length of the byte sequences are used to determine the similarity value. Padding is used to make the aspect ratios the same.

US 2010/208988 A1 discloses image feature extraction that includes extracting an cutout image that includes an object from an original image; filling borders of the cutout image with a single color as a background to generate a minimum square image; resizing the minimum square image into a resized square image having a first predetermined size; dividing the resized square image into sub-image blocks having a second predetermined size; computing luminosity derivatives of neighboring pixels in horizontal, vertical, positive 45° , and negative 45° directions for each of the sub-image blocks; obtaining a quintuplet characteristic vector for each of the sub-image block; and forming an image characteristic vector of the original image using the quintuplet characteristic vectors of all the sub-image blocks.

Document XP036882804 discloses an approximation algorithm based on greedy approach for face recognition with partial occlusion. The document purports to make two contributions, the first one is in designing a string generation algorithm for converting a face into a sequence of strings and the second is designing an approximation algorithm based on greedy approach for matching strings. (KRISHNAVENI B ET AL, "Approximation algorithm based on greedy approach for face recognition with partial occlusion", MULTIMEDIA TOOLS AND APPLICATIONS, KLUWER ACADEMIC PUBLISHERS, BOSTON, US, vol. 78, no. 19, doi:10.1007/S11042-019-07831-7, ISSN 1380-7501, (20190622), pages 27511 - 27531, (20190622), httr)://dx.doi.org/10.1007/s11042-019-07831-7)

As fraudsters utilizes the same images across different insurance companies, there is a need for a database comprised of images from different insurers. This will help them combat fraud by getting an alert signal when an image is an image that has been handled (used in an insurance claim) in earlier claims., However; saving images directly to a database that can be accessed by different employees at insurance companies is not compliant to e.g. GDPR. To combat future fraud, a method is needed to save images into a database in a compliant manner, while still having the ability to correctly verifying if an image is used in other insurance claims, even when said image has been modified, e.g. cropped, skewed, rotated and/or mirrored.

There is a thus a need for increased security in the pay-out process as well as in verifying document authenticity at large. There is also a need for reducing the amount of data stored over time such as to limit data storage capacity expansions and minimize energy expenditure. Additionally, there is a need for being able to store reduced data format of digital images such that data is applicable for certain purposes while at the same time not requiring the cumbersome handling in compliance with confidentiality and data protection regulations.

## SUMMARY OF THE INVENTION

The invention is set out in the independent claims.

In a first aspect, the present invention provides a method for quantitatively rating the degree of similarity between two digital images (100), comprising the following steps for each of the digital images (100):

- Check whether image width is less than image height, if image width is less than image height rotate image 90 degrees to obtain a horizontal orientated digital image (190),
- resize the horizontal orientated digital image (190) to a resized digital image (110) having a certain fixed size and number of pixels (130),
- pixelate the digital image to pixels of a fixed size to obtain a pixilated image (200) with an average color of each pixelated area (195),
- calculate total pixel values of the pixelated image (200) top row and calculate total pixel values of the pixelated image (200) bottom row,
- compare the total pixel value of the top row with the total pixel value of the pixilated image bottom row, if the total pixel value of pixilated image the top row is less than the total pixel value of the pixelated image bottom row, then rotate the pixilated image (200) 180 degrees; If the total pixel value of the pixilated image top row is equal to total pixel value of the pixilated image bottom row, then proceed calculating the next row from top row and compare to next row from bottom row, if the total pixel value of the next row from top are equal to the total pixel value of the next row from bottom proceed with next rows until the centre row is reached (201),
- calculate total pixel values of the pixelated image (200) first column and calculate total pixel values of the pixelated image (200) last column and compare the total pixel values; if the total pixel value of the pixilated image first-column is less than the total pixel value of the pixelated image last column value, then flip the pixilated image (200) over its vertical axis; if the total pixel value of the pixilated image first-column value is equal to the total pixel value of the pixilated image last column value, then proceed calculating the total pixel value of the pixilated image next column from first column and compare to the total pixel value of the pixilated image next column from last column; if the total pixel value of the pixilated image next column from first column are equal to total pixel value of the pixilated image of the next column from last column proceed with next columns until centre column is reached (202),
- read a pixel from each of the pixelated area in the pixelated image (198) and calculate closest predefined color of each of the pixels read (203) to obtain a pixel RGB,
- convert each pixel RGB color to HEX value (204),
- add each pixel HEX value to an image string (170) representing the image pixel value,
- then calculate a hit-score (180) as a percentage identity or homology between the image strings (170) of the two digital images (100), said hit-score (180) being the rating of the similarity between the two digital images (100).

In a preferred embodiment the method further comprises the step of rotating the pixilated image (200) 180 degrees if the total pixel value of the pixilated image next row from top is less than the total pixel value of the pixilated image next row from bottom.

In a preferred embodiment the method further comprises the step of rotating the pixilated image (200) 180 degrees if the total pixel value of the pixilated image row V from top is less than the total pixel value of the pixilated image row V from bottom, where V is an integer larger than 1.

In a preferred embodiment the method further comprises the step of flipping the pixilated image over its vertical axis if the total pixel value of the pixilated image next column from first column is less than the total pixel value of the pixilated image next column from last column.

In a preferred embodiment the method further comprises the step of flipping the pixilated image over its vertical axis if the total pixel value of the pixilated image number Z column from first column is less than the total pixel value of the pixilated image of number Z column from last column, where Z is an integer larger than 1.

In a preferred embodiment the pixilated image is rotated in the above-mentioned procedure before it is flipped in the above-mentioned procedure.

In a second aspect, the present invention provides a method for quantitatively rating the degree of similarity between two digital images (100), comprising the following steps for each of the digital images (100):

- resize the digital image (100) to a resized digital image (110) having a certain fixed size and number of pixels,

- divide the resized digital image (110) into a number of sections (120) having X rows and Y columns so that each section has the same number of pixels (130),

- divide each section (120) into a number of pixels (130) by rows and columns, so that each section has the same number of pixels (130),

- for each pixel (130), determine the color code value set (140), e.g. RGB, and assign a score being an integer or a letter for each of the primary colors (e.g. R, G and B), then assemble these scores into a pixel string (150),

- for each section (120) assemble all the pixel strings (150) into a section string (160) by appending the pixel strings (150) in a fixed order through all the pixels (130) in the section (120), and

- assemble all the section strings (160) into an image string (170) by appending the section strings (160) in a fixed order through all the sections (120) of said resized digital image (110),

then calculate a hit-score (180) as a percentage identity or homology between the image strings (170) of the two digital images (100), said hit-score (180) being the rating of the similarity between the two digital images (100).

Using this method, identical images and minor modifications thereof can be matched. If a high hit-score (180) is being calculated, then there is a high likelihood that two different images are indeed a set of an original image and a modified version of that original image.

For example, a prior loss image (an image used in a previous insurance claim) may be provided in a different format or with different metadata in connection with fraudulent claims across different insurance companies. Also, such prior loss images may be provided with edits to part of the image, e.g., concealing certain blurred areas or cropping part out.

Hence, in one embodiment the modification of the image is a rotated image, a resized image, a skewed image, a cropped image, a mirrored image, an image with addition or elimination of one or more elements such as text or signs, or a combination thereof.

The present invention has several advantages, most notably that there is no need for storing previously handled images provided an image string (170) has been calculated by a known embodiment of the present method and stored. Since the image string (170) is a reduced data format that do not contain all the information from the image used for generating the image string (170), the confidentiality and data protection compliance challenges of storing images in a database (to e.g. see if an image has already been used in a previous insurance claim) are solved by the present invention.

Storing only the reduced data format in the form of the image string (170) takes up only little space in a database and thus limits the speed of data storage capacity upgrade over time and it is energy-saving.

Furthermore, by comparing a digital image through the use of image strings (170) with a list of historically used/generated image strings (170), a portion of insurance fraud attempts can be stopped in their tracks, freeing up insurance investigators to investigate other cases, such as more complicated cases. Yet further, the investigators need to perform fewer mouse-clicks on average to process an insurance claim.

In a third aspect the present invention provides a method for determining whether an image (100) has already been handled as the same image (100) or a modification thereof, comprising the determination of an image string (170) by the method provided in the first aspect of the invention and calculating the hit-score as a percentage identity or homology between the image string (170) of said image and the image strings (170) in a database (205) comprising the image strings of previously handled images for which image strings (170) have been calculated and stored in the database (205).

An important advantage of the methods of both the first and second aspect of the present invention is that they do not require access to the previously handled images for which image strings (170) are stored in a database (205).

In a fourth aspect the present invention provides the use of the methods for the verification of the uniqueness of an image, such as from a digital image (100).

In a fifth aspect the present invention provides the use of the methods in the process of handling insurance claims for increased security in the pay-out process.

In a sixth aspect the present invention provides a computing device (210) having a processor (211) adapted to perform the steps of the methods.

In a further aspect the present invention provides a computer program comprising instructions which cause the computer (210) to carry out one of the methods, when the program is executed by a computer (210).

In a yet further aspect, the present invention provides computer-readable medium comprising instructions which cause the computer (210) to carry out one of the methods, when executed by a computer (210).

## BRIEF DESCRIPTION OF THE DRAWINGS

Figure 1. Comparison of the original image (A) with different types of modifications of the original image being a rotated image (B), a resized image (C), a skewed image (D), a cropped image (E) and a mirrored image (F).

Figure 2. Example embodiment with an original digital image (100) having 700 x 1000 pixels resolution being resized to a resized digital image (110) having a fixed size and number of pixels being 9 x 9 resolution.

Figure 3. The example embodiment from Figure 2 where the resized image (110) is divided into sections (120) of 9 pixels (3 x 3) to select a single pixel (130) for determination of the color code value set (140) being scored by assigning an integer from 1-5 and assembling the tree scores to the pixel string (150).

Figure 4. Graphical illustration of the steps of the method of an embodiment of the invention

Figure 5 Illustration of a computing device according to an embodiment of the invention

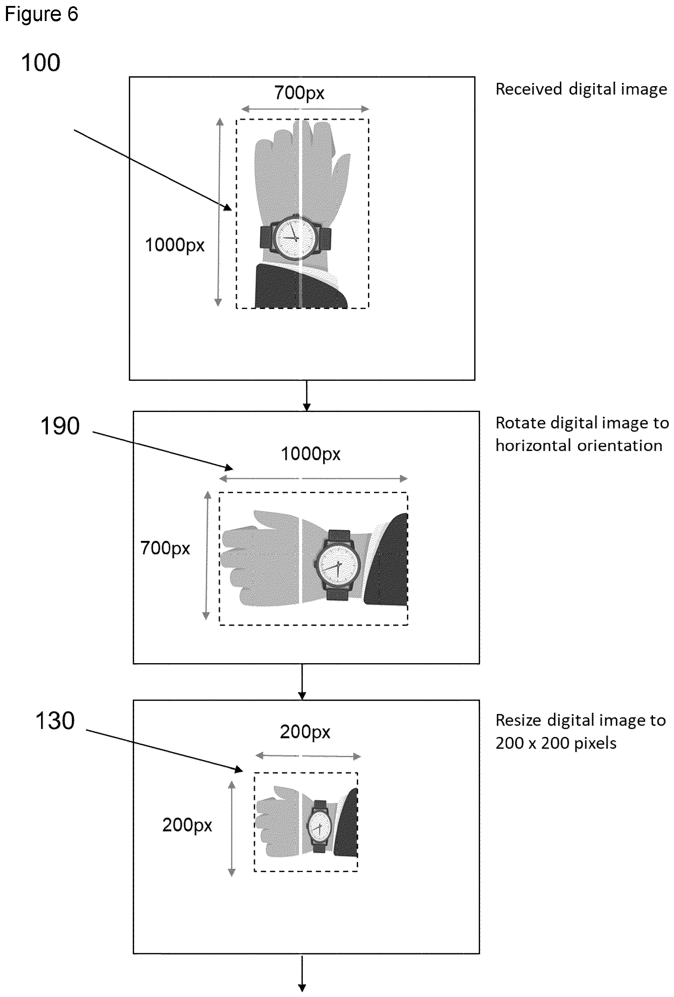

Figure 6. Example embodiment with an original digital image (100) having 700 x 1000 pixels resolution being rotated to horizontal view and resized to a fixed size and number of pixels (110) being 200 x 200 pixels.

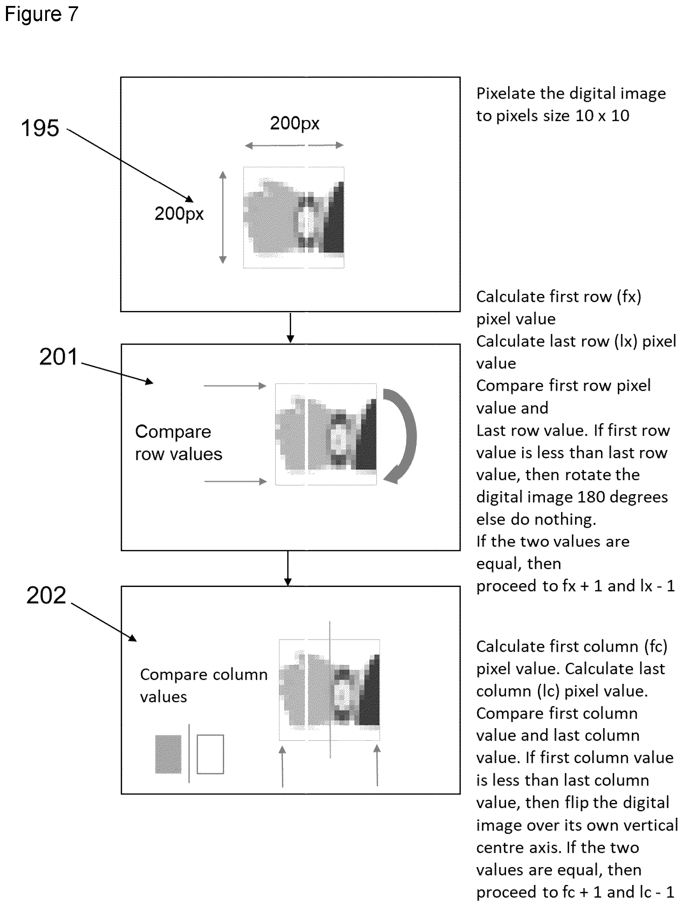

Figure 7. The example embodiment from Figure 6 where the resized image (110) is divided into sections (120) of 400 pixels (10 x 10) by pixelation and rotated to bring the brightest area of the digital image in top and flipped over its vertical centre axis to bring the brightest area of the digital image to the right.

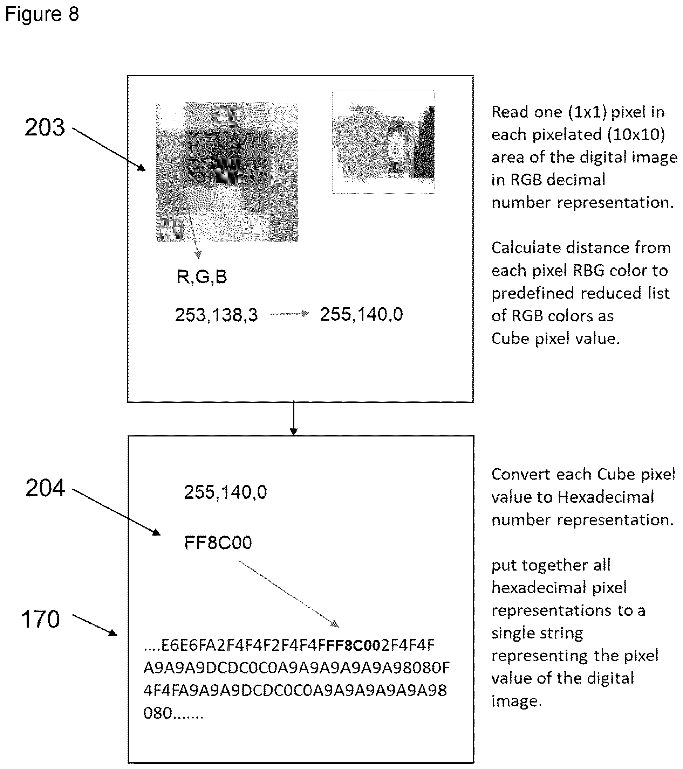

Figure 8. The example embodiment from Figure 7 where the resized image and pixelated image (110) is red one pixel from each of the pixelated areas (10 x 10 pixels) and closest color from predefined list of colors is identified and converted from decimal representation of the RGB color to hexadecimal representation and assembling the hexadecimal pixel values to the pixel string.

Figure 9. Graphical illustration of the steps of the method of an embodiment of the invention.

## DETAILED DESCRIPTION OF THE INVENTION.

In the following the invention is described in detail through exemplary embodiments which should not be considered as limiting to the scope of the invention.

Throughout the present text and figures it is noted that number identifiers are used to designate both the singular and the plural form of an item or concept. For instance, the identifier "100" is used both in singular for "digital image (100)" and in plural for "digital images (100)".

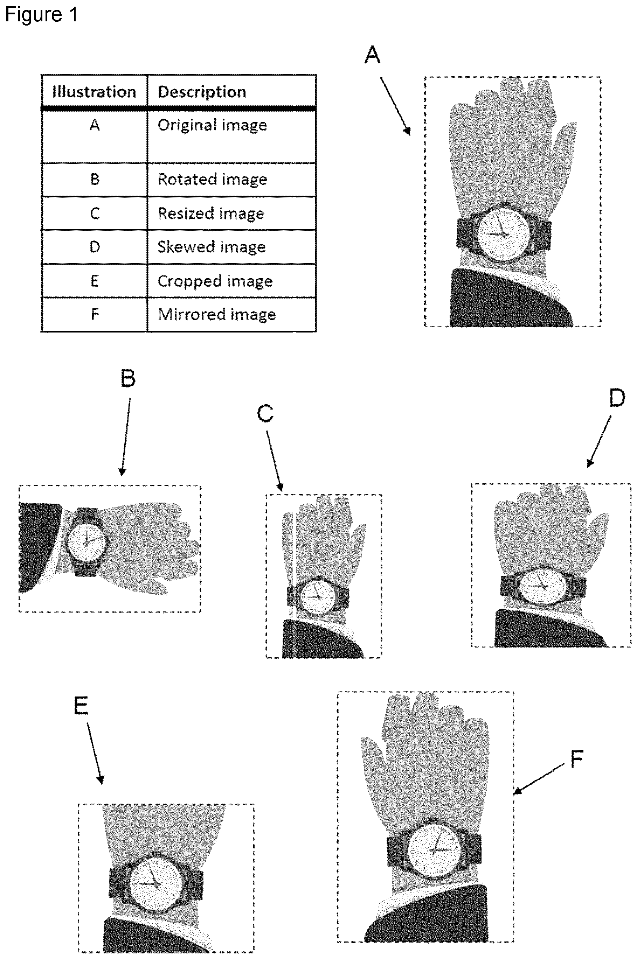

Figure 1 illustrates some types of modifications to an original image which may typically be encountered when images are re-used in multiple insurance companies to conduct insurance fraud, in order to conceal that it's an image that the fraudster have already used.

In one embodiment the modification of the image is a rotated image, a resized image, a skewed image, a cropped image, a mirrored image, an image with addition or elimination of one or more elements such as text or signs, an image with a part being blurred, or a combination thereof.

In an aspect the present invention provides a method for quantitatively rating the degree of similarity between two digital images (100), comprising the following steps for each of the digital images (100):

- resize the digital image (100) to a digital image having a certain fixed size and number of pixels (110),

- divide the resized digital image (110) into a number of sections (120) having X rows and Y columns so that each section has the same number of pixels (130),

- divide each section (120) into a number of pixels (130) by rows and columns, so that each section has the same number of pixels (130),

- for each pixel (130), determine the color code value set (140), e.g. RGB, and assign a score being an integer or a letter for each of the primary colors (e.g. R, G and B), then assemble these scores into a pixel string (150),

- for each section (120) assemble all the pixel strings (150) into a section string (160) by appending the pixel strings (150) in a fixed order through all the pixels (130) in the section (120), and

- assemble all the section strings (160) into an image string (170) by appending the section strings (160) in a fixed order through all the sections (120) of said resized digital image (110),

then calculate a hit-score (180) as a percentage identity or homology between the image strings (170) of the two digital images (100), said hit-score (180) being the rating of the similarity between the two digital images (100).

In the practical use of the method of the invention the image string (170) of a particular digital image (100) can be calculated by the method of the invention and then compared by calculation of percentage identity or homology to a plurality of image strings (170) in a database where said plurality of image strings (170) are often generated previously by using the same method with the same parameters for resizing the digital image (100), dividing into sections (120) and pixels (130), generation of pixel strings (150) and section strings (160) ending up with the image string (170).

In this practical application of the method of the invention, the requestor of the quantitative image uniqueness analysis who submits the digital image will receive the highest hit-score (180) or a group of the highest hit-scores (180) calculated by comparing the image string (170) with a plurality of previously generated image strings (170) in a database.

In one exemplary embodiment the assignment of a score for the color code value set (140) being RGB (46, 117, 182) is as follows: For each of R(46), G(117) and B(182) an integer between 1-5 is assigned via the following system :

If

$$R(0) = 1$$

If

$$R(1\text{-}85) = 2$$

If

$$R(86\text{-}170) = 3$$

If

$$R(171\text{-}254) = 4$$

If

$$R(255) = 5.$$

The same assignment for G and B. In this embodiment the pixel (130) having the color code value set RGB (46, 117, 182) will generate the pixel string (150) being "234".

Hence, in a section (120) having 3 rows and 3 columns there will be 9 pixels (130) and thus 9 pixel strings (150). When these 9 pixel strings (150) are assembled it will give a section string (160) which has a length of 27 integers, e.g.:
"222 232 444 222 234 222 222 431 334".

If the resized image (110) was divided by 4 rows and 4 columns into 16 sections (120), then the image string (170) has 16 x 27 = 432 integers.

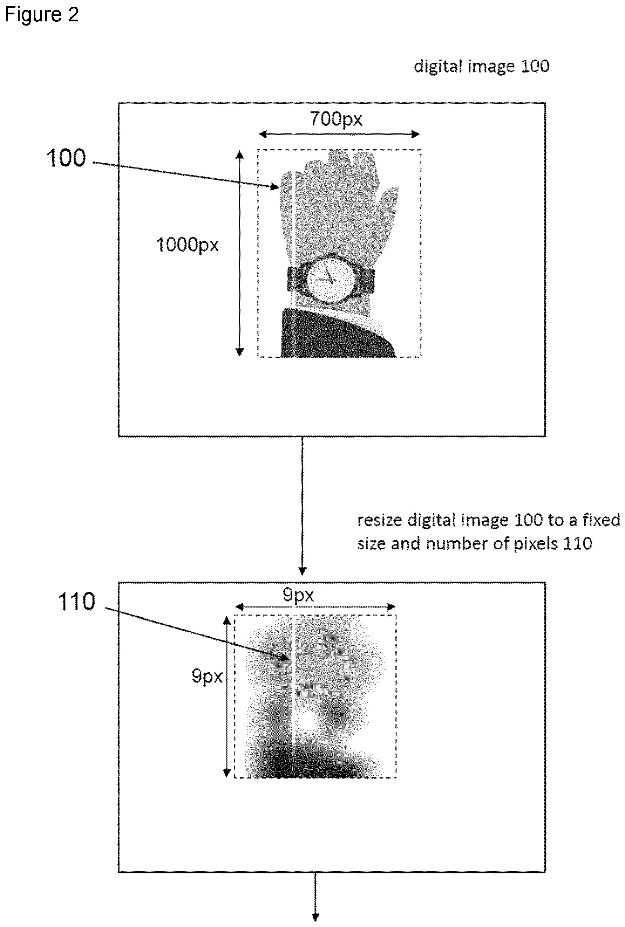

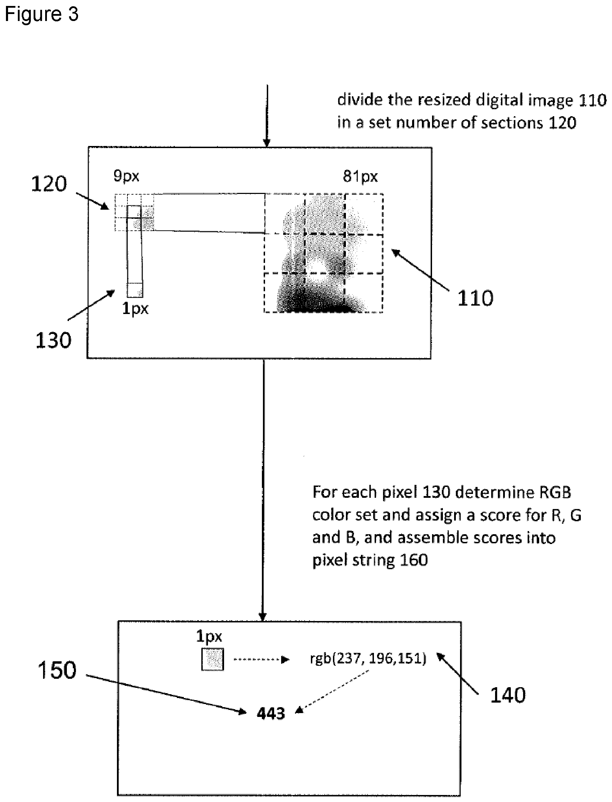

In another exemplary embodiment Figure 2 shows an original digital image (100) having 700 x 1000 pixels resolution being resized to a fixed size and number of pixels (110) being 9 x 9 resolution. In Figure 3 the resized image (110) is divided into sections (120) using X = 3 rows and Y = 3 columns. Each section (120) has 3 x 3 = 9 pixels (130) and for each pixel (130) is determined the color code value set (140) according to the RGB system, giving the set: RGB (237, 196, 151). The pixel string (150) assigned for this RGB set using the above assignment system having integers from 1-5 will generate the pixel string (150): "443". With 9 pixels (130) in each section (120) the section string (160) will consist of 9 x 3 = 27 integers. As we have 9 sections (120), the image string (170) will consist of 9 x 27 = 243 integers.

It is well known to the person skilled in the art how to calculate a hit-score (180) as a percentage identity or homology between the image strings (170) of the two digital images (100). Since the two image strings (170) used for calculating the percentage identity or homology are always the same length, the algorithm for calculating percentage identity is very simple: align the two image strings (170) and count how many positions have identical integer or letter, and divide that number by the length of the image string (170) times 100 (unit: %). Also, when calculating percentage homology the image strings (170) have the same length, hence for homology there will only be the added rule for how big a discrepancy qualifies for homology. The calculation is then to sum the homologous and identical positions of the image strings (170), divide by the length of the image string (170) times 100 (unit: %).

It is given that the division of the resized images (110) is by X rows and Y columns into the sections (120), then the sections (120) are either squares or rectangles. Choosing between squares and rectangles here is based on the size and format of the digital image, since the better match will give the best method / algorithm for the purpose.

In one embodiment, both X and Y are 3 or 4. In another embodiment (X, Y) is selected from (3,4), (4,3), (3,5) and (5,3).

Also, the division of the sections (120) into pixels (130) by rows and columns results in squares or rectangles of the pixels (130) in one given section (120). In one embodiment the number of pixels (130) in each section is in the range from 6 to 70, in the range from 8 to 49, in the range from 9 to 25, or in the range from 9 to 16.

In another embodiment the number of pixels (130) in each section is 8, 9, 12, 15, 16 or 20.

In another exemplary embodiment the assignment of a score for the color code value set (140) being RGB (46, 117, 182) is as follows: For each of R(46), G(117) and B(182) an integer between 1-6 is assigned via the following system :

If

$$R(0\text{-}9) = 1$$

If

$$R(10-40) = 2$$

If

$$R(41-99) = 3$$

If

$$R(100-170) = 4$$

If

$$R(171-245) = 5$$

If

$$R(246-255) = 6.$$

The same assignment for G and B. In this exemplary embodiment the pixel (130) having the color code value set RGB (46, 117, 182) will generate the pixel string (150) being "345".

In another aspect the present invention provides a method for quantitatively rating the degree of similarity between two digital images (100), comprising the following steps for each of the digital images (100):

- Check whether image width is less than image height, if image width is less than image height rotate image 90 degrees to obtain a horizontal orientated digital image (190),
- resize the horizontal orientated digital image (190) to a resized digital image (110) having a certain fixed size and number of pixels (130),
- pixelate the digital image to pixels of a fixed size to obtain a pixilated image (200) with an average color of each pixelated area (195),
- calculate total pixel values of the pixelated image (200) top row and calculate total pixel values of the pixelated image (200) bottom row,
- compare the total pixel value of the top row with the total pixel value of the pixelated image bottom row, if the total pixel value of pixilated image the top row is less than the total pixel value of the pixelated image bottom row, then rotate the pixilated image (200) 180 degrees; **If** the total pixel value of the pixilated image top row is equal to total pixel value of the pixilated image bottom row, then proceed calculating the next row from top row and compare to next row from bottom row, if the total pixel value of the next row from top are equal to the total pixel value of the next row from bottom proceed with next rows until the centre row is reached (201),
- calculate total pixel values of the pixelated image (200) first column and calculate total pixel values of the pixelated image (200) last column and compare the total pixel values; if the total pixel value of the pixilated image first-column is less than the total pixel value of the pixilated image last column value, then flip the pixilated image (200) over its vertical axis; if the total pixel value of the pixilated image first-column value is equal to the total pixel value of the pixilated image last column value, then proceed calculating the total pixel value of the pixilated image next column from first column and compare to the total pixel value of the pixilated image next column from last column; if the total pixel value of the pixilated image next column from first column are equal to total pixel value of the pixilated image of the next column from last column proceed with next columns until centre column is reached (202),
- read a pixel from each of the pixelated area in the pixilated image (198) and calculate closest predefined color of each of the pixels red (203) to obtain a pixel RGB,
- convert each pixel RGB color to HEX value (204),
- add each pixel HEX value to an image string (170) representing the image pixel value,
- then calculate a hit-score (180) as a percentage identity or homology between the image strings (170) of the two digital images (100), said hit-score (180) being the rating of the similarity between the two digital images (100).

In the practical use of the method of the invention the image string (170) of a particular digital image (100) is calculated by the method of the invention and then compared by calculation of percentage identity or homology to a plurality of image strings (170) in a database where said plurality of image strings (170) are often generated previously by using the same method with the same parameters for resizing the digital image (100), dividing into pixels (130), generation of pixel strings (202) ending up with the image string (170).

In this practical application of the method of the invention, the requestor of the quantitative image uniqueness analysis who submits the digital image will receive the highest hit-score (180) or a group of the highest hit-scores (180) calculated by comparing the image string (170) with a plurality of previously generated image strings (170) in a database.

In one exemplary embodiment the assignment of a score for the color code value set being RGB (230,172,109) is as follows. Calculate distance to closest predefined 140 colors - sample listed below:

PowderBlue; 176,224,230

Purple; 128,0,128

Red;255,0,0

RosyBrown; 188,143,143

RoyalBlue;65,105,225

SaddleBrown;139,69,19

Salmon;250,128,114

**SandyBrown;244,164,96**

SeaGreen;46,139,87

SeaShell;255,245,238

Sienna; 160,82,45

Silver;192,192,192

SkyBlue; 135,206,235

SlateBlue;106,90,205

SlateGray;112,128,144

The calculated closest color is RGB (244,164,96). The RGB pixel value is transformed from decimal to hexadecimal notation to provide conform data representation. Thus (244,164,96) is F4A460 which is the pixel string.

Pixels strings representing each pixel in the digital images is assembled into a single sting representing the digital image (170).

........4 A 4 6 0 F 4 A 4 6 0 D E B 8 8 7 F F F5EEFFFFFFFFFAFAFFFAFAFFFAFAFFFAFAFF FAF AF5F5F5556B2F2F4F4FFAEBD7F5DEB3DEB887 E9967AF5DEB3DEB887F 4A460F4A460F4A460F4 A460DEB887D3D3D3A9A9A9C0C0C0FFFFFFFFFFFF FF 8F8FFC0C0C02F4F4F2F4F4FDEB887F4A460F4 A460F4A460F4A460F4A460F4 A460F4A460F4A460-F4A46......

As will be evident from the above two exemplary embodiments using a different system for assignment of the score for the color code value set (160) being RGB (46, 117, 182), the method of the invention works for the comparison of two or more image strings (170) provided all of these image strings (170) are generated by the same method, i.e. same parameter for resizing the digital image (100), dividing into pixels (202), generation of pixel strings (203) ending up with the image string (170).

The color code value set 140 may be determined based on different color systems. In one embodiment the color code value set 140 is based on the RGB (red, green, blue) system giving a three digit/letter pixel string (150). The RGB system is widely used and commercial scanners can provide this format. Another color system is the CMYK (cyan, magenta, yellow and black) system giving a four digit/letter pixel string150.

The score assigned to each pixel using the color code value set (140) can be any system which combines simplicity and discriminatory ability. In an embodiment, said score is an integer or a letter which is selected from an integer, a single digit integer, an integer in the range from 1 to 7, an integer in the range from 1 to 5 and an integer in the range from 1 to 3. In another embodiment, said score is an integer or a letter which is selected from a letter, a letter from a group of three letters, a letter from a group of five letters or a letter from a group of seven letters, such as (a, b, c) or (f, g, h, i ,j).

In an embodiment, said fixed order for assembling the strings is row by row starting from the top row moving down or starting from the bottom row moving up.

In an embodiment, said fixed order for assembling the strings is column by column starting from the left hand column moving right or starting from the right hand column moving left.

In a further aspect the present invention provides the use of the method for the verification of the uniqueness of an image, such as from a digital image (100).

Such a use of the method of the invention for verification of the uniqueness of an image is advantageous in a number of industries, in particular in connection with the prevention of fraud, such as insurance fraud or fraud with product guarantees. In the latter situation a manufacturer of e.g. expensive engine parts may be faced with guarantee claims over broken engine part, in which case it is advantageous to ensure that an image of the broken engine part is unique, i.e. it has not already been submitted via another engines part retailer.

In a further aspect the present invention provides the use of the method in the process of handling insurance claims for increased security in the pay-out process.

As set out above, it is a great advantage that the method converts the digital image to an image string (170), since the actual image of the latter is not available and hence the image strings (170) can be stored in a database (200) without the set-up required for handling confidential documents and personal information under e.g. GDRP or HIPAA.

In a further aspect the present invention provides a computing device (210) having a processor (211) adapted to perform the steps of the present method.

In a yet further aspect, the present invention provides a computer program comprising instructions which cause the computer (210) to carry out the method, when the program is executed by a computer (210).

In a yet further aspect, the present invention provides a computer-readable medium comprising instructions which cause the computer (210) to carry out the method, when executed by a computer (210).

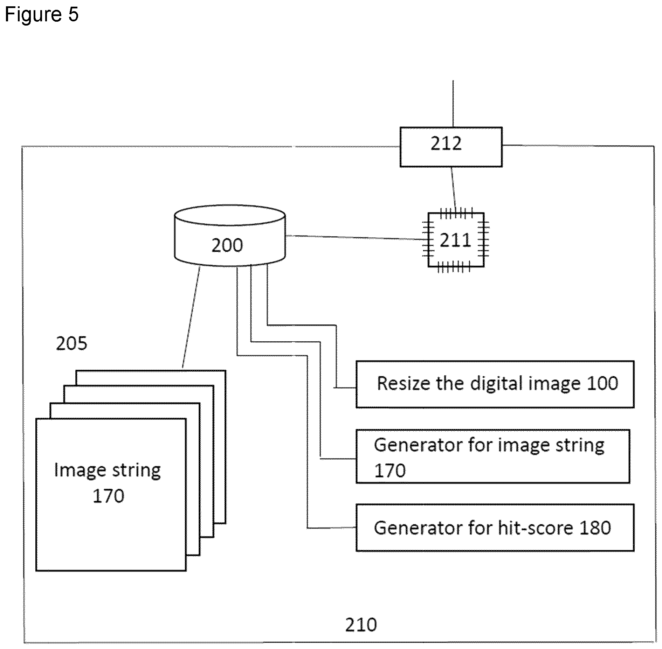

Figure 5 illustrates the computer (210) instructed for performing the method for quantitatively rating the degree of similarity between two digital images (100), the system comprising a computer (210) having a processor (211), a networking interface (212) and a storage device (200) having a database of image strings (205) generated by the present method.

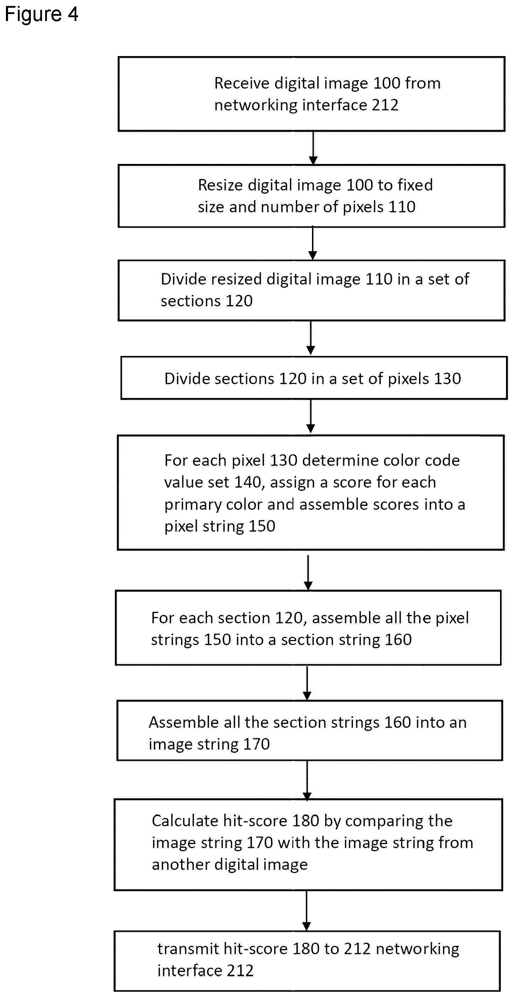

The networking interface (212) receives requests for digital image (100) uniqueness verification from various devices, such as over an organizations intranet, an insurance claim handling system, or a public internet. The networking interface (212) transmits the signal to the processor (211) for computations according to the steps of the method, see e.g. Figure 4 for illustration of the steps.

The processor (211) performs the division of the resized image (110) into sections (120), and division of the sections (120) into pixels (130), followed by the assignment of a score for each of the individual color codes and assembling them into a pixel string (150). For all the sections (120), the processor (211) then generates a section string (160) by assembling all the pixel strings (150) from a section (120) and then generates the image string (170) by assembling all of the section strings (160). The processor (211) finally calculates a hit-score (180) as a percentage identity or homology between the image strings (170) of two digital images (100), said hit-score (180) being the rating of the similarity between the two digital images (100). This hit-score (180) is returned via the networking interface (212) to the device making the request for uniqueness verification (e.g., an insurance investigator). As described above the practical use of the method of the invention will often imply that an image string (170) is compared by the calculation using another, previously generated, image string (170) or plurality of image strings (170) from a database.

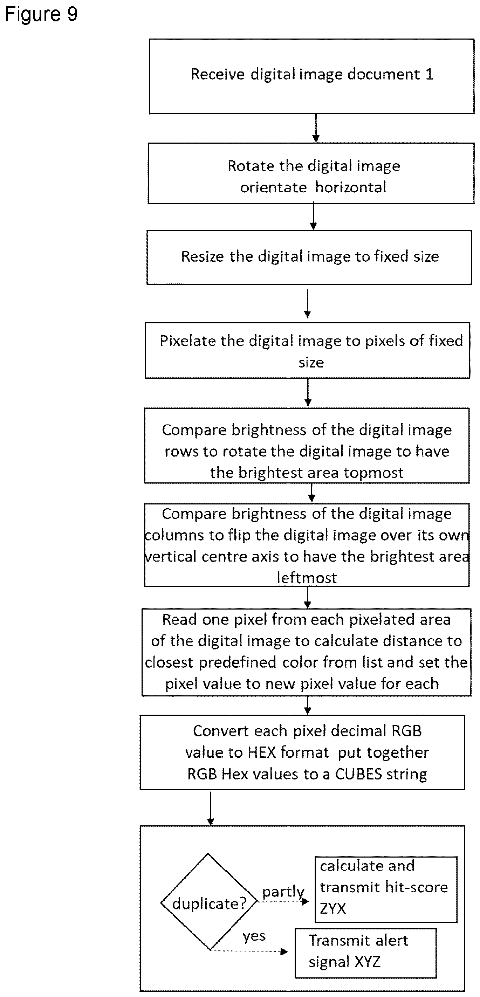

Alternatively, as illustrated in figure 9, the processor (211) performs the rotating of the digital image to obtain a horizontal image (190) and the resizing of the mage to a resized image (110), rotation and flipping vertically, into pixelation (195), into pixels (130), followed by the transform from decimal representation to hexadecimal representation them into a image string (170). For all the pixels, the processor (211) then generates an image string (170) by assembling all the pixel strings. The processor (211) finally calculates a hit-score (180) as a percentage identity or homology between the image strings (170) of two digital images (100), said hit-score (180) being the rating of the similarity between the two digital images (100). This hit-score (180) is returned via the networking interface (212) to the device making the request for uniqueness verification (e.g., an insurance investigator). As described above the practical use of the method of the invention will often imply an image string (170) is compared by the calculation using another, previously generated, image string (170) or plurality of image strings (170) from a database.

The hit-score (180) is a percentage number in the range from 0% indicating no similarity to 100% indicating exact match under parameters used in the method. The requestor for comparing digital images will determine one or more threshold levels for alerts on initiating closer analysis and scrutiny in relation to digital image not being unique. For instance, above the threshold of 95% an alert is issued to the requestor while for a threshold between 85% and 95% an observance notice is issued to the requestor.

## Claims

1. A method for quantitatively rating the degree of similarity between two digital images (100), comprising the following steps for each of the digital images (100):

    - Check whether image width is less than image height, if image width is less than image height rotate image 90 degrees to obtain a horizontal orientated digital image (190),
    - resize the horizontal orientated digital image (190) to a resized digital image (110) having a certain fixed size and number of pixels (130),
    - pixelate the resized digital image to pixels of a fixed size to obtain a pixilated image (200) with an average color of each pixelated area (195),
    - calculate total pixel values of the pixelated image (200) top row and calculate total pixel values of the pixelated image (200) bottom row
    - compare the total pixel value of the top row with the total pixel value of the pixilated image bottom row, if the total pixel value of pixilated image the top row is less than the total pixel value of the pixilated image bottom row, then rotate the pixilated image (200) 180 degrees; **If** the total pixel value of the pixilated image top row is equal to total pixel value of the pixilated image bottom row, then proceed calculating the next row from top row and compare to next row from bottom row, if the total pixel value of the next row from top are equal to the total pixel value of the next row from bottom proceed with next rows until the centre row is reached (201),
    - calculate total pixel values of the pixelated image (200) first column and calculate total pixel values of the pixelated image (200) last column and compare the total pixel values; if the total pixel value of the pixilated image first-column is less than the total pixel value of the pixilated image last column value, then flip the pixilated image (200) over its vertical axis; if the total pixel value of the pixilated image first-column value is equal to the total pixel value of the pixilated image last column value, then proceed calculating the total pixel value of the pixilated image next column from first column and compare to the total pixel value of the pixilated image next column from last column; if the total pixel value of the pixilated image next column from first column are equal to total pixel value of the pixilated image of the next column from last column proceed with next columns until centre column is reached (202),
- read a pixel from each of the pixelated area in the pixilated image (198) and calculate closest predefined color of each of the pixels read (203) to obtain a pixel RGB,
- convert each pixel RGB color to HEX value (204),
- add each pixel HEX value to an image string (170) representing the image pixel value,
- then calculate a hit-score (180) as a percentage identity or homology between the image strings (170) of the two digital images (100), said hit-score (180) being the rating of the similarity between the two digital images (100).

2. A method for determining whether a digital image (100) has already been handled as the same digital image (100) or a modification thereof, comprising the determination of an image string (170) by the method defined in claim 1 and calculating the hit-score (180) as a percentage identity or homology between the image string (170) of said image and image strings in a database (205) comprising the image strings (170) of previously handled images, for which the image strings (170) have been calculated and stored in the database (205).

3. The method according to claim 2, wherein said modification of the digital image is a rotated image, a resized image, a skewed image, a cropped image, a mirrored image, an image with addition or elimination of one or more elements such as text or signs, or a combination thereof.

4. Use of the method as defined in any of claims 1-3 for the verification of the uniqueness of an image, such as a digital image.

5. Use of the method as defined in any of claims 1-3 in the process of handling insurance claims in the pay-out process.

6. A computing device having a processor (211) adapted to perform the steps of the method as defined in any of claims 1-3.

7. A computer program comprising instructions which cause the computer (210) to carry out the method as defined in any of claims 1-3, when the program is executed by a computer (210).

8. A computer-readable medium comprising instructions which, when executed by a computer (210), cause the computer (210) to carry out the method as defined in any of claims 1-3.

**Patentansprüche**

1. Ein Verfahren zum quantitativen Bewerten des Grades der Ähnlichkeit zwischen zwei digitalen Bildern (100), umfassend die folgenden Schritte für jedes der digitalen Bilder (100):

- Prüfen, ob die Bildbreite geringer ist als die Bildhöhe, wenn die Bildbreite geringer ist als die Bildhöhe Drehen des Bildes um 90 Grad, um ein horizontal orientiertes digitales Bild (190) zu erhalten,
- Ändern der Größe des horizontal orientierten digitalen Bildes (190) zu einem größenveränderten digitalen Bild (110) mit einer bestimmten festen Größe und Anzahl von Pixeln (130),
- Pixelieren des größenveränderten digitalen Bildes zu Pixeln einer festen Größe, um ein pixeliertes Bild (200) mit einer durchschnittlichen Farbe für jeden pixelierten Bereich (195) zu erhalten,
- Berechnen der Gesamtpixelwerte der obersten Reihe des pixelierten Bildes (200) und Berechnen der Gesamtpixelwerte der untersten Reihe des pixelierten Bildes (200)
- Vergleichen des Gesamtpixelwerts der obersten Reihe mit dem Gesamtpixelwert der unteren Reihe, falls der Gesamtpixelwert der obersten Reihe des pixelierten Bildes geringer ist als der Gesamtpixelwert der untersten Reihe des pixelierten Bildes, dann Drehen des pixelierten Bildes (200) um 180 Grad; falls der Gesamtpixelwert der obersten Reihe des pixelierten Bildes gleich dem Gesamtpixelwert der untersten Reihe des pixelierten Bildes ist, dann Fortfahren mit dem Berechnen der der obersten Reihe nächsten Reihe und Vergleichen mit der der untersten Reihe nächsten Reihe, falls der Gesamtpixelwert der der obersten Reihe nächsten Reihe gleich dem Gesamtpixelwert der der untersten Reihe nächsten Reihe ist Fortfahren mit nächsten Reihen, bis die mittlere Reihe erreicht ist (201),
- Berechnen der Gesamtpixelwerte der ersten Spalte des pixelierten Bildes (200) und Berechnen der Gesamtpixelwerte der letzten Spalte des pixelierten Bildes (200) und Vergleichen der Gesamtpixelwerte; falls der Gesamtpixelwert der ersten Spalte des pixelierten Bildes geringer ist als der Gesamtpixelwert der letzten Spalte des pixelierten Bildes, dann Umklappen des pixelierten Bildes (200) um seine vertikale Achse; falls der Gesamtpixelwert der ersten Spalte des pixelierten Bildes gleich dem Gesamtpixelwert der letzten Spalte des pixelierten Bildes ist, dann Fortfahren mit dem Berechnen des Gesamtpixelwertes der der ersten Spalte nächsten Spalte des pixelierten Bildes und Vergleichen mit dem Gesamtpixelwert der der letzten Spalte nächsten Spalte des pixelierten Bildes; falls der Gesamtpixelwert der der ersten Spalte nächsten Spalte des pixelierten Bildes gleich dem Gesamtpixelwert der der letzten Spalte nächsten Spalte des pixelierten Bildes ist Fortfahren mit nächsten Spalten, bis die mittlere Spalte erreicht ist (202),
- Lesen eines Pixels aus jedem der pixelierten Bereiche im pixelierten Bild (198) und Berechnen der nächsten vordefinierten Farbe jedes der gelesenen Pixel (203), um ein Pixel-RGB zu erhalten,
- Umwandeln jeder Pixel-RGB-Farbe in einen HEX-Wert (204),
- Hinzufügen jedes Pixel-HEX-Wertes zu einer Bildfolge (170), die den Bildpixelwert darstellt,
- dann Berechnen eines Trefferwertes (180) als eine prozentuale Identität oder Homologie zwischen den Bildfolgen (170) der zwei digitalen Bilder (100), wobei jener Trefferwert (180) die Bewertung der Ähnlichkeit zwischen den zwei digitalen Bildern (100) ist.

2. Ein Verfahren zum Bestimmen, ob ein digitales Bild (100) bereits als dasselbe digitale Bild (100) oder eine Modifikation verarbeitet wurde, umfassend das Bestimmen einer Bildfolge (170) durch das in Anspruch 1 definierte Verfahren und Berechnen des Trefferwertes (180) als eine prozentuale Identität oder Homologie zwischen der Bildfolge (170) jenes Bildes und Bildfolgen in einer Datenbank (205) umfassend die Bildfolgen (170) von zuvor verarbeiteten Bildern, für die die Bildfolgen (170) berechnet und in der Datenbank (205) gespeichert worden sind.

3. Das Verfahren gemäß Anspruch 2, wobei jene Modifikation des digitalen Bildes ein gedrehtes Bild, ein größenverändertes Bild, ein schiefes Bild, ein beschnittenes Bild, ein gespiegeltes Bild, ein Bild mit Hinzufügung oder Entfernung eines oder mehr Elemente wie etwa Text oder Zeichen, oder eine Kombination davon ist.

4. Verwendung des Verfahrens wie in irgendeinem der Ansprüche 1-3 definiert zum Verifizieren der Einzigartigkeit eines Bildes, wie etwa eines digitalen Bildes.

5. Verwendung des Verfahrens wie in irgendeinem der Ansprüche 1-3 definiert im Prozess der Verarbeitung von Versicherungsansprüchen im Auszahlungsprozess.

6. Ein Rechengerät mit einem Prozessor (211), der ausgelegt ist, die Schritte des Verfahrens wie in irgendeinem der Ansprüche 1-3 definiert durchzuführen.

7. Ein Computerprogramm umfassend Anweisungen, die den Computer (210) veranlassen, das Verfahren wie in irgendeinem der Ansprüche 1-3 definiert durchzuführen, wenn das Programm von einem Computer (210) ausgeführt wird.

8. Ein computerlesbares Medium umfassend Anweisungen, die, wenn von einem Computer (210) ausgeführt, den Computer (210) veranlassen, das Verfahren wie in irgendeinem der Ansprüche 1-3 definiert durchzuführen.

**Revendications**

1. Procédé d'évaluation quantitative du degré de similarité entre deux images numériques (100), comprenant les étapes suivantes pour chacune des images numériques (100) :

- Vérifiez si la largeur de l'image est inférieure à la hauteur de l'image ; si la largeur de l'image est inférieure à la hauteur de l'image, faites pivoter l'image de 90 degrés pour obtenir une image numérique orientée horizontalement (190),
- redimensionnez l'image numérique orientée horizontalement (190) en une image numérique redimensionnée (110) ayant une certaine taille et un certain nombre de pixels fixes (130),
- pixelisez l'image numérique redimensionnée en pixels de taille fixe pour obtenir une image pixelisée (200) d'une couleur moyenne dans chaque zone pixelisée (195),
- calculez les valeurs totales de pixels dans la rangée supérieure de l'image pixelisée (200) et calculez les valeurs totales de pixels dans la rangée inférieure de l'image pixelisée (200)
- comparez la valeur totale de pixels dans la rangée supérieure avec la valeur totale de pixels dans la rangée inférieure de l'image pixelisée ; si la valeur totale de pixels dans la rangée supérieure de l'image pixelisée est inférieure à la valeur totale de pixels dans la rangée inférieure de l'image pixelisée, faites pivoter l'image pixelisée (200) de 180 degrés ; si la valeur totale de pixels dans la rangée supérieure de l'image pixelisée est égale à la valeur totale de pixels dans la rangée inférieure de l'image pixelisée, calculez la rangée suivante à partir de la rangée supérieure et comparez à la rangée suivante à partir de la rangée inférieure ; si la valeur totale de pixels dans la rangée suivante du haut est égale à la valeur totale de pixels dans la rangée suivante du bas, continuez avec les rangées suivantes jusqu'à atteindre la rangée centrale (201),
- calculez les valeurs totales de pixels dans la première colonne de l'image pixélisée (200) et calculez les valeurs totales de pixels dans la dernière colonne de l'image pixélisée (200) et comparez les valeurs totales de pixels ; si la valeur totale de pixels dans la première colonne de l'image pixélisée est inférieure à la valeur totale de pixels dans la dernière colonne de l'image pixélisée, tournez l'image pixélisée (200) sur son axe vertical ; si la valeur totale de pixels de la valeur de la première colonne de l'image pixélisée est égale à la valeur totale de pixels de la valeur de la dernière colonne de l'image pixélisée, calculez la valeur totale de pixels dans la colonne suivante de l'image pixélisée à partir de la première colonne et comparez à la valeur totale de pixels dans la colonne suivante de l'image pixélisée à partir de la dernière colonne ; si la valeur totale de pixels dans la colonne suivante de l'image pixélisée à partir de la première colonne est égale à la valeur totale de pixels dans la colonne suivante de l'image pixélisée à partir de la dernière colonne, continuez aux colonnes suivantes jusqu'à atteindre la colonne centrale (202),
- lisez un pixel de chacune des zones pixélisées dans l'image pixélisée (198) et calculez la couleur prédéfinie la plus proche de chacun des pixels lus (203) pour obtenir un pixel RVB,
- convertissez chaque pixel de couleur RVB en valeur HEX (204),
- ajoutez chaque pixel de valeur HEX à une série d'image (170) représentant la valeur de pixels de l'image,
- calculez ensuite un score de succès (180) sous forme d'un pourcentage d'identité ou d'homologie entre les séries d'image (170) des deux images numériques (100), ledit score de succès (180) étant l'évaluation de la similarité entre les deux images numériques (100).

2. Procédé pour déterminer si une image numérique (100) a déjà été traitée comme la même image numérique (100) ou une modification de celle-ci, comprenant la détermination d'une série d'image (170) par le procédé défini dans la revendication 1 et le calcul du score de succès (180) sous forme d'un pourcentage d'identité ou d'homologie entre la série d'image (170) de ladite image et les séries d'image dans une base de données (205) comprenant les séries d'image (170) des images traitées précédemment, pour lesquelles les séries d'image (170) ont été calculées et stockées dans la base de données (205).

3. Procédé selon la revendication 2, dans lequel ladite modification de l'image numérique est une image pivotée, une image redimensionnée, une image inclinée, une image recadrée, une image miroir, une image avec ajout ou élimination d'un ou de plusieurs éléments tels que du texte ou des signes, ou une combinaison de ceux-ci.

4. Utilisation du procédé tel que défini dans l'une quelconque des revendications 1 à 3 pour la vérification de l'unicité d'une image, telle qu'une image numérique.

5. Utilisation du procédé tel que défini dans l'une quelconque des revendications 1 à 3 dans le processus de traitement des demandes d'indemnisation d'assurance dans le processus de paiement.

6. Appareil informatique comportant un processeur (211) adapté pour exécuter les étapes du procédé tel que défini dans l'une quelconque des revendications 1 à 3.

7. Programme informatique comprenant des instructions qui amènent l'ordinateur (210) à exécuter le procédé tel que défini dans l'une quelconque des revendications 1 à 3, lorsque le programme est exécuté par un ordinateur (210).

8. Support lisible par ordinateur comprenant des instructions qui, lors de l'exécution par un ordinateur (210), amènent l'ordinateur (210) à exécuter le procédé tel que défini dans l'une quelconque des revendications 1 à 3.

Figure 1

| Illustration | Description |
|---|---|
| A | Original image |
| B | Rotated image |
| C | Resized image |
| D | Skewed image |
| E | Cropped image |
| F | Mirrored image |

A

B

C

D

E

F

Figure 2

digital image 100

100 →

700px

1000px

resize digital image 100 to a fixed size and number of pixels 110

110 →

9px

9px

## Figure 3

divide the resized digital image 110
in a set number of sections 120

9px                    81px

120

110

1px

130

For each pixel 130 determine RGB
color set and assign a score for R, G
and B, and assemble scores into
pixel string 160

1px

rgb(237, 196,151)

150

140

443

Figure 4

```
┌─────────────────────────────────────┐
│     Receive digital image 100 from   │
│       networking interface 212       │
└─────────────────────────────────────┘
                   │
                   ▼
┌─────────────────────────────────────┐
│      Resize digital image 100 to fixed │
│        size and number of pixels 110 │
└─────────────────────────────────────┘
                   │
                   ▼
┌─────────────────────────────────────┐
│   Divide resized digital image 110 in a set of │
│               sections 120           │
└─────────────────────────────────────┘
                   │
                   ▼
┌─────────────────────────────────────┐
│     Divide sections 120 in a set of pixels 130 │
└─────────────────────────────────────┘
                   │
                   ▼
┌─────────────────────────────────────┐
│   For each pixel 130 determine color code │
│     value set 140, assign a score for each │
│    primary color and assemble scores into a │
│              pixel string 150        │
└─────────────────────────────────────┘
                   │
                   ▼
┌─────────────────────────────────────┐
│   For each section 120, assemble all the pixel │
│      strings 150 into a section string 160 │
└─────────────────────────────────────┘
                   │
                   ▼
┌─────────────────────────────────────┐
│   Assemble all the section strings 160 into an │
│              image string 170        │
└─────────────────────────────────────┘
                   │
                   ▼
┌─────────────────────────────────────┐
│   Calculate hit-score 180 by comparing the │
│   image string 170 with the image string from │
│           another digital image      │
└─────────────────────────────────────┘
                   │
                   ▼
┌─────────────────────────────────────┐
│   transmit hit-score 180 to 212 networking │
│               interface 212          │
└─────────────────────────────────────┘
```

Figure 5

Figure 6

**100** Received digital image

700px

1000px

**190** Rotate digital image to horizontal orientation

1000px

700px

**130** Resize digital image to 200 x 200 pixels

200px

200px

## Figure 7

195

200px

200px

Pixelate the digital image
to pixels size 10 x 10

201

Compare
row values

Calculate first row (fx)
pixel value
Calculate last row (lx) pixel
value
Compare first row pixel
value and
Last row value. If first row
value is less than last row
value, then rotate the
digital image 180 degrees
else do nothing.
If the two values are
equal, then
proceed to fx + 1 and lx - 1

202

Compare column
values

Calculate first column (fc)
pixel value. Calculate last
column (lc) pixel value.
Compare first column
value and last column
value. If first column value
is less than last column
value, then flip the digital
image over its own vertical
centre axis. If the two
values are equal, then
proceed to fc + 1 and lc - 1

Figure 8

203

R,G,B

253,138,3 ⟶ 255,140,0

Read one (1x1) pixel in
each pixelated (10x10)
area of the digital image
in RGB decimal
number representation.

Calculate distance from
each pixel RBG color to
predefined reduced list
of RGB colors as
Cube pixel value.

204

255,140,0

FF8C00

170

....E6E6FA2F4F4F2F4F4F**FF8C00**2F4F4F
A9A9A9DCDC0C0A9A9A9A9A9A98080F
4F4FA9A9A9DCDC0C0A9A9A9A9A9A98
080.......

Convert each Cube pixel
value to Hexadecimal
number representation.

put together all
hexadecimal pixel
representations to a
single string
representing the pixel
value of the digital
image.

# Figure 9

```
┌─────────────────────────────────────┐
│  Receive digital image document 1    │
└─────────────────────────────────────┘
                  │
                  ▼
┌─────────────────────────────────────┐
│      Rotate the digital image        │
│       orientate  horizontal          │
└─────────────────────────────────────┘
                  │
                  ▼
┌─────────────────────────────────────┐
│   Resize the digital image to fixed  │
│                size                  │
└─────────────────────────────────────┘
                  │
                  ▼
┌─────────────────────────────────────┐
│ Pixelate the digital image to pixels │
│          of fixed size               │
└─────────────────────────────────────┘
                  │
                  ▼
┌─────────────────────────────────────┐
│  Compare brightness of the digital   │
│  image rows to rotate the digital    │
│  image to have the brightest area    │
│             topmost                  │
└─────────────────────────────────────┘
                  │
                  ▼
┌─────────────────────────────────────┐
│  Compare brightness of the digital   │
│  image columns to flip the digital   │
│  image over its own vertical centre  │
│  axis to have the brightest area     │
│             leftmost                 │
└─────────────────────────────────────┘
                  │
                  ▼
┌─────────────────────────────────────┐
│  Read one pixel from each pixelated  │
│  area of the digital image to        │
│  calculate distance to closest       │
│  predefined color from list and set  │
│  the pixel value to new pixel value  │
│  for each                            │
└─────────────────────────────────────┘
                  │
                  ▼
┌─────────────────────────────────────┐
│    Convert each pixel decimal RGB    │
│    value to HEX format  put together │
│    RGB Hex values to a CUBES string  │
└─────────────────────────────────────┘
                  │
                  ▼
┌─────────────────────────────────────────────┐
│                                              │
│              ◇                ┌─────────────┐ │
│         ╱ duplicate? ╲ partly │ calculate and│ │
│         ╲           ╱ ────────▶ transmit hit-│ │
│              ◇                │ score ZYX    │ │
│              │ yes            └─────────────┘ │
│              ▼                ┌─────────────┐ │
│                               │ Transmit     │ │
│                               │ alert signal │ │
│                               │ XYZ          │ │
│                               └─────────────┘ │
└─────────────────────────────────────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8175387 B1

- US 2010208988 A1

**Non-patent literature cited in the description**

- Approximation algorithm based on greedy approach for face recognition with partial occlusion. **KRISH-NAVENI B et al.** MULTIMEDIA TOOLS AND APPLI-CATIONS. KLUWER ACADEMIC PUBLISHERS, 22 June 2019, vol. 78, 27511-27531